# EUROPEAN PATENT SPECIFICATION

(11) **EP 2 311 670 B1**
(45) Date of publication and mention of the grant of the patent: **15.08.2012**
(21) Application number: 09173137.2
(22) Date of filing: 15.10.2009
(51) Int. Cl.: B60G 11/18, B60G 11/20, B60G 17/02, B60G 21/05

(54) **Suspension system**
Aufhängungssystem
Système de suspension

(43) Date of publication of application: 20.04.2011
(73) Proprietor: Volvo Car Corporation, 405 31 Göteborg (SE)
(72) Inventor: Brokholc, Michal, 43645, Askim (SE); Andersson, John-Erik, 44455, Stenungsund (SE); Stenvall, Lars, 45991, Ljungskile (SE); Svensson, Stefan, 42350, Torslanda (SE)
(74) Representative: Widahl, Jenny Marie

(56) References cited:
- EP-A1- 0 156 705
- EP-A1- 0 649 764
- EP-A1- 1 679 209
- EP-A1- 1 837 212
- FR-A1- 2 794 689
- US-A- 2 688 495

## Description

### TECHNICAL FIELD

The invention relates to a suspension system for a vehicle having a frame and a pair of wheels positioned adjacent said frame, said suspension system comprising an anti-roll bar and a torsional spring bar.

### BACKGROUND OF THE INVENTION

Suspension systems are commonly used in vehicles, such as cars or trucks. The suspension systems permit resilient suspension of the wheel to provide good comfort and good road holding.

Traditionally, front wheels have wheel suspensions comprising coil springs on top of or side by side with a shock absorber. There are several drawbacks of using coil springs. The coil springs need a certain space, which also influences the design of the hood of the car. The design of the hood in its turn influences the pedestrian protection. Further, coils springs normally do not deform in case of a crash and thereby restrict the size of a possible deformation zone.

Document EP 1 679 209 A1 discloses a generic suspension system of a vehicle having a main torsion bar connected to a cradle of an axle system of the vehicle and to stub axles of wheels of the vehicle. The main torsion bar has a central part placed on the cradle along a transversal direction of the vehicle. A complementary bar is parallel to the central part of the main torsion bar and is connected, at its ends, to the central part and to the cradle.

Document EP 0 156 705 A1 discloses a suspension system for a two-wheeled undercarriage of a vehicle comprising two arms pivotable about an axis transversal to said vehicle, each arm carrying one wheel, and an assembly of tubes of axes parallel to said transversal axis and made of a composite material of fibers and synthetic material. The assembly comprises a first tube integral with the vehicle chassis by each of its ends, and about which tube each arm can pivot, as well as two second tubes integral by each of their ends with one of said arms, said first tube and said second tubes being interconnected in their middle part.

### SUMMARY OF THE INVENTION

The object of the present invention is to overcome or ameliorate at least one of the disadvantages of the prior art, or to provide a useful alternative.

It is desirable to provide a suspension system which does not require the use of coil springs.

It is further desirable to provide a suspension system improving pedestrian protection.

The object above may be achieved by the invention according to claim 1.

In a first aspect of the present invention there is provided a suspension system. The suspension system is intended for a vehicle having a frame and a pair of wheel positioned adjacent the frame, with each wheel suspended in a wheel suspension. The suspension system comprises:
- an anti-roll bar, the anti-roll bar having ends connected to the wheel suspensions of each respective wheel, the anti-roll bar being connected to the frame by a first connection permitting rotational movement in relation to the frame around the longitudinal axis of the anti-roll bar and
- at least one torsional spring bar, the torsional spring bar being fixedly connected to the frame by a second connection.

The anti-roll bar is connected to the torsional spring bar by a third connection adapted to transfer rotational and/or twisting movement of the anti-roll bar into a torque of the torsional spring bar.

Vertical movement of a wheel is transferred to the anti-roll bar. The central portion of the anti-roll bar will be subjected to a rotational and/or twisting movement around its longitudinal axis. If the left-hand and right-hand wheels are subjected to the same vertical movement, the anti-roll bar will rotate. However, if the left-hand and right-hand wheels are subjected to different vertical movements the anti-roll bar will be subjected to a combination of rotation and twist. The third connection transfers this movement into a torque of the torsional spring bar. The total resilient effect will be a function of the torsional resistance of the combination of the anti-roll bar, the third connection and the torsional spring bar.

With the suspension system according to the invention, coil springs may be omitted. It is therefore possible to make the hood of the car lower, which may provide better pedestrian protection and/or improve driver sight. The crash performance may be improved, since the deformation zone can be designed without having to take the coil springs into account. It is also possible to use wheels of a larger diameter. The decking of the vehicle, i.e. the joining of the chassis components to the car body, may be simpler as compared to a vehicle with a conventional suspension system using coil springs. The front end of the vehicle may be designed with a smaller turning diameter as compared to a similar vehicle having a traditional wheel suspension system.

The above-mentioned third connection may for example be a link arrangement, a gear wheel arrangement or a joint between the torsional spring bar and the anti-roll bar. Preferably, the third connection is located somewhere along the central portion of the anti-roll bar, such as essentially at the midpoint of the anti-roll bar. In that case, the left and right half of the suspension system can be made symmetric to each other.

Advantageously, the third connection is arranged to transfer rotational and/or twisting movement of the anti-roll bar into a torque of the torsional spring bar, while keeping the risk of causing bending of the torsional spring bar is as low as possible. This could be facilitated using a pivotal connection as the third connection. The third connection may be radially offset from the longitudinal axis of the anti-roll bar.

The third connection may comprise at least one bracket, which is fixed to the anti-roll bar and/or the torsional spring bar. By using a connection comprising brackets and a link, a desired connection only transferring rotational and/or twisting movement of the anti-roll bar into a torque of the torsional spring bar without risk of causing bending of the torsional spring bar is provided.

One or more extra connections, permitting rotational movement in relation to the frame of the anti-roll bar around its longitudinal axis, may be located in between the first connections. There may also be located one or more extra connections in between the second connections, the extra connections permitting rotational movement in relation to the frame of the torsional spring bar around its longitudinal axis. These extra connections may be helpful to prevent bending of the respective bars.

At least the central portion of the anti-roll bar may be parallel to at least the central portion of the torsional spring bar.

In one embodiment, the torsional spring bar is a straight bar. In another embodiment, a portion of the torsional spring bar has a U-shaped geometry. The U-shaped geometry may be used instead of using brackets, as mentioned above.

The torsional spring bar may extend transversally in relation to the frame. The torsional spring bar may extend essentially from one side of the frame to the opposite side.

The end of the anti-roll bar may be connected to a lower link arm of the wheel suspension. A link may connect the wheel suspension and the anti-roll bar. The link may be adapted to transfer vertical wheel movement into rotational movement of the anti-roll bar. Moreover, the link may further have an adjustable length, thereby for example permitting adjustment of vehicle ground clearance and/or ride height.

A connection block may be attached at one side of the frame and another connection block at the opposite side of the frame, wherein each of the connection blocks comprises a first connection and a second connection of the kind mentioned above. Thereby the same connection block can be used to retain both the anti-roll bar and the torsional spring bar.

The spring constant of the suspension system may be selectable by adjustment of the length, cross-section, material and/or geometry of the anti-roll bar, the torsional spring bar and/or the third connection.

Moreover, an actuator, which is adapted to apply a torque to the torsional spring bar, may be connected to the torsional spring bar. The actuator may be used for pre-tensioning of the torsional spring bar, for instance in order to be able to increase or decrease ground clearance and/or act as a self-levelling system. The amount of pre-tensioning may be automatically set by the vehicle information system or may be set by the driver.

In a second aspect of the present invention there is provided a vehicle, wherein the front and/or rear wheels are suspended by a suspension system as mentioned above.

### BRIEF DESCRIPTION OF THE DRAWINGS

The present invention will hereinafter be further explained by means of non-limiting examples with reference to the appended figures wherein:
- Fig. 1: is a schematic perspective view of a suspension system according to a first embodiment of the invention,
- Fig. 2: is a schematic perspective view of a suspension system according to a second embodiment of the invention.
- Fig. 3: is a schematic perspective view of a suspension system according to a third embodiment of the invention.
- Fig. 4: is a schematic perspective view of a suspension system according to a fourth embodiment of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other. Furthermore, it should be realized that even if the figures illustrate suspension systems in cars, the systems may also be used in other vehicles such as trucks or buses. Preferably, suspension systems according to the invention are used for light vehicles. The suspension system may be used for one or more pairs of wheels. Even if the disclosed examples illustrate front wheel suspensions, the suspension system may also be used for rear wheel suspension, especially if the rear wheels are non-driving.

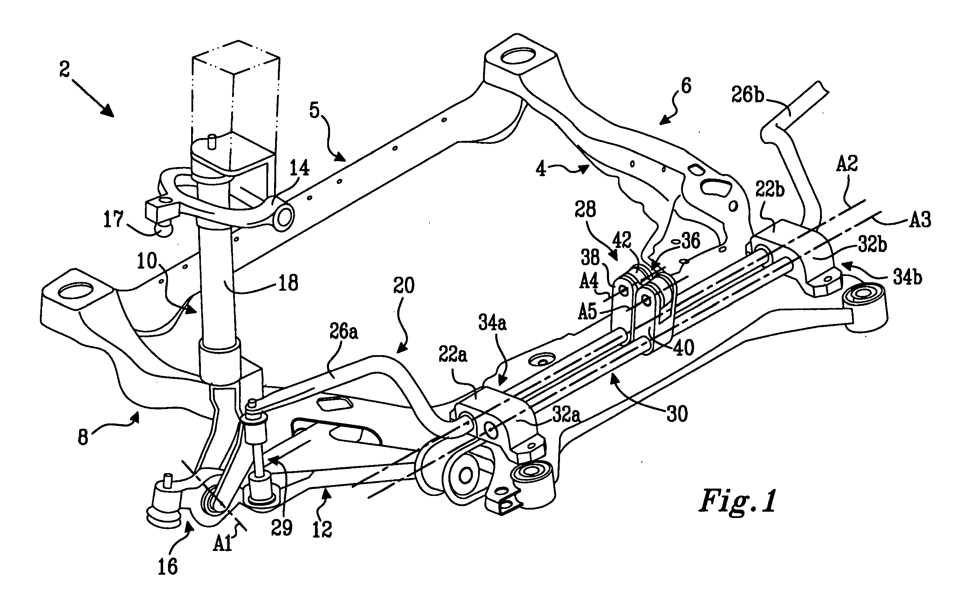

Figure 1 illustrates a suspension system 2 for a vehicle according to a first embodiment the invention. The vehicle has a frame 4, whereof only a portion is shown. The frame 4 has a front end 5, a right-hand side 6 and a left-hand side 8. In the figure, only the details of the left-hand side wheel suspension 10 are shown. However, the right-hand side is similar but reversed. The wheel suspension 10 comprises a lower link arm 12 and an upper link arm 14. The wheel (not illustrated) is connected by means of a knuckle (not illustrated) between the distal end 16 of the lower link arm 12 and the joint 17 of the upper link arm 14. Further, the lower link arm 12 is pivotally connected to a damper 18 around axis A1. An anti-roll bar 20 connects the left-hand side wheel suspension 10 to the right-hand side wheel suspension. The anti-roll bar 20 is further connected to the frame 4 at a first connection 22a, 22b at each side of the frame 4 permitting rotational movement in relation to the frame around the longitudinal axis A2 of the anti-roll bar 20. Generally, the function of an anti-roll bar is to increase the stiffness of the suspension system in order to increase the resistance of the vehicle to roll in turns. The anti-roll bar 20 is U-shaped and comprises two lever portions 26a, 26b at each side with a central portion 28 along the longitudinal axis A2 in between. The lever portions 26a, 26b are located outside of the first connections 22a, 22b, while the central portion 28 is located in between the first connections 22a, 22b. A vertical motion of the wheel, when e.g. driving over a hole in the road, is transferred via the lever portion 26a into a rotation and/or twist of the central portion 28 of the anti-roll bar 20. An outer link 29 is adapted to transfer the vertical movement of the wheel to the lever portion 26a, 26b of the anti-roll bar 20.

The suspension system 2 further comprises a torsional spring bar 30, which is fixedly connected to the frame 4 at second connections 32a, 32b at each side of the frame 4. The torsional spring bar 30 extends parallel to the central portion 28 of the anti-roll bar 20. In Figure 1, the first connection 22a, 22b at each side is combined with the second connection 32a, 32b at each side to form a common connection block 34a, 34b at each side, but the first and second connection may also be separate from each other. The anti-roll bar 20 is connected to the torsional spring bar 30 by means of a third connection 36. The third connection 36 is able to transfer a rotational and/or twisting movement of the anti-roll bar 20 into a torque of the torsional spring bar 30. The third connection 36 is located at essentially the mid-point of the anti-roll bar. When the central portion of the torsional spring bar 30 is forced to rotate and since the ends of the torsional spring bar are fixed, the torsional spring bar is exposed to a torque twisting the torsional spring bar around its own longitudinal axis A3. The torsional spring bar 30 will then act as a torsional spring, whose characteristics are determined by its torsional resistance. The third connection 36 comprises a first bracket 38 fixed to the anti-roll bar 20, a second bracket 40 fixed to the torsional spring bar 30, and a link 42 connecting the first 38 and second 40 bracket. The link 42 is pivotally connected to the first bracket 38 around the axis A4, and to the second bracket 40 around the axis A5. The first 38 and second brackets 40 extend parallel to each other, in this case upwards when the wheels are in a neutral position.

One or more extra connections (not illustrated) permitting rotational movement of the anti-roll bar 20 around the longitudinal axis A2 may be located in between the first connections 22a, 22b. There may also be located one or more extra connections (not illustrated) permitting rotational movement of the torsional spring bar 30 around the longitudinal axis A3 in between the second connections 32a, 32b. These extra connections may be helpful to prevent bending of the respective bars, since they connect the respective bar 20, 30 to the frame 4.

Below the function of the suspension system 2 will be explained. As a first case, supposing that the right and left wheels move together in vertical direction, e.g. when driving the vehicle over a speed bump, the lower link arm 12 transfers the vertical movement via the outer link 29 to the lever arm 26a. The lever arm 26a transfers the movement into a rotational movement of the central portion 28 of the anti-roll bar 20 around the longitudinal axis A2. The same occurs at the other side of the vehicle. The rotational movement is further transferred via the third connection 36 to a torque of the torsional spring bar 30. The total resilient effect will be a function of the torsional resistance of the combination of the anti-roll bar 20, the third connection 36 and the torsional spring bar 30. The spring constant of the combined spring can be varied by varying lengths, cross-sections, geometries and material characteristics of the anti-roll bar 20, the third connection 36 and the torsional spring bar 30. Often the simplest way to select the spring constant is by adjustment of the lengths and geometry of the brackets 38, 40 and the link 42 of the third connection 36.

In the second case, where the right and left wheels move independently, for example if one of the wheels runs over a hole, the lever arms 26a and 26b will transfer two different amounts of vertical movement. The central portion 28 of the anti-roll bar 20 will thereby be subjected to a combination of rotation and twist around its longitudinal axis A2. As already described for the first case, these movements will be transferred as a torque to the torsional spring bar 30 via the third connection 36. The total resilient effect will be a function of the torsional resistance of the combination of the anti-roll bar 20, the third connection 36 and the torsional spring bar 30.

The third connection 36 may be of any kind being able to transfer rotational and/or twisting movement of the central portion 28 of the anti-roll bar 20 into a torque of the torsional spring bar 30. Moreover, with an arrangement as in Figure 1, it is possible to transfer the rotational and/or twisting movement of the anti-roll bar 20 into a torque of the torsional spring bar 30 without subjecting the torsional spring bar 30 to a bending force.

In a traditional suspension system, a coil spring would have been located on top of the damper 18, here indicated by dashed lines. However, according to the invention, that coil spring can be omitted and thus the height of the suspension is lowered.

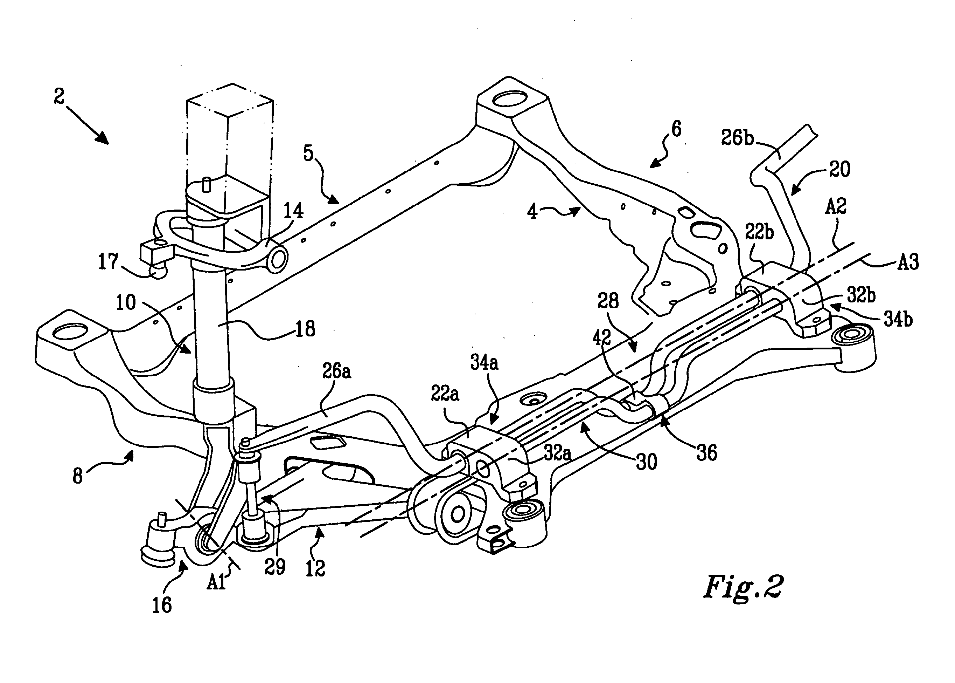

Figure 2 illustrates a second embodiment of the invention. Since many parts are similar to in Figure 1, the description will focus on the differences. The anti-roll bar 20 has a double U-shape. The outer U-shape is similar to in Figure 1, permitting the lever arms 26a, 26b to transfer vertical motion into rotational motion. Further, the central portion 28 is in itself U-shaped with the U essentially centred around the midpoint of the central portion 28. The torsional spring bar 30 has a similar U-shape as the central portion 28 of the anti-roll bar 20. The U of the anti-roll bar 20 and the U of the torsional spring bar 30 both extend downwards when the wheel suspension is in a neutral position. The U shapes are thus parallel. The third connection 36 in the form of the link 42 transfers movement between the anti-roll bar 20 and the torsional spring bar 30 at the bottom of the U. Due to the U-shape, no brackets as in Figure 1 are needed. As an alternative, it would also possible to have the U-shapes directed upwards.

It would be possible to use other shapes than U-shape. Also, the central portion 28 of the anti-roll bar 20 and the torsional spring bar 30 may have different shapes, but in that case the shapes should be adapted to each other, so that one bar does not collide with the other during rotation and/or twist. The shapes should further be coordinated, so that the distance between the bars will be the same at the third connection 36.

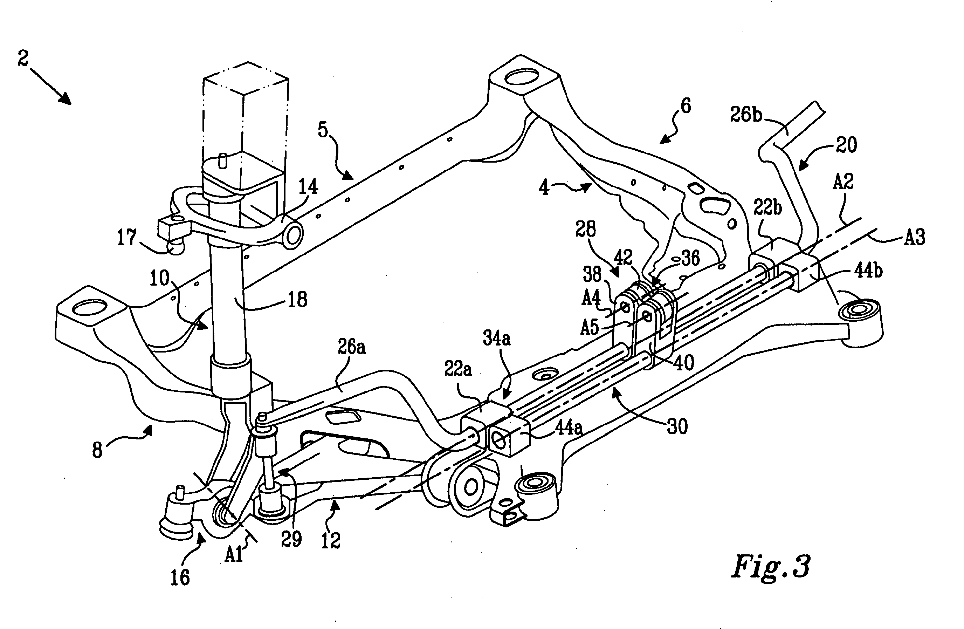

In Figure 3, the second connection comprises an actuator 44a, 44b at each end of the torsional spring bar 30. The actuators 44a, 44b are able to twist the torsional spring bar 30 around its longitudinal axis A3. The actuators may be used for pre-tensioning of the torsional spring bar 30. By twisting the torsional spring bar 30, the third connection 36 will transfer the movement into rotation of the central portion 28 of the anti-roll bar 20. Via the lever arms 26a, 26b, the movement is further transferred into a vertical movement of the wheel suspension 10. For example, different load weights in the vehicle or different road conditions may make it desirable to be able to increase or decrease ground clearance of the vehicle. Increase and decrease, respectively, are chosen by the twisting direction of the pre-tensioning. The amount of pre-tensioning may be automatically set by the vehicle information system or may be set by the driver via a control unit.

Figure 3 shows an embodiment with two actuators. A single actuator or two or more actuators may also be located anywhere along the torsional spring bar 30, and in that case the ends of the torsional spring bar 30 may be fixed by the second connection as described above. The actuator may be driven by an electrical motor.

An alternative way to adjust the ground clearance of the vehicle would be to let the length of the outer links 29 be adjustable, for example by means of a stretching screw. The length of the outer links 29 may also in that case be adjusted by the vehicle information system or may be adjusted by the driver via a control unit. It may also be possible to set the length of one or both of the outer links 29 at the production plant in order to compensate for a height difference between the left-hand side and right-hand side of the car, which may be a result of production tolerances.

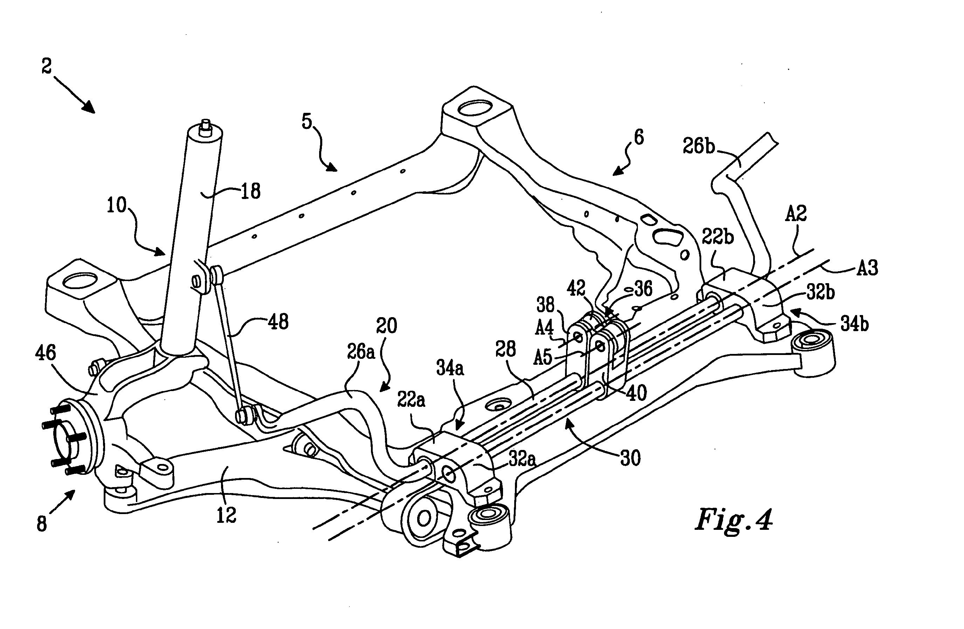

Figures 1 to 3 illustrate the suspension system according to the invention for a double-wishbone suspension. However, the suspension system according to the invention is also applicable for other kinds of suspensions, such as for example a McPherson suspension, sometimes spelt MacPherson, as illustrated in Figure 4.

Since many parts and functions are the same as for the double-wishbone suspension of Figures 1 to 3, only some differences will be pointed out below. The same reference numbers are used as in Figure 1, for parts which are used in both kinds of suspensions. Figure 4 shows the wheel suspension 10 of the left-hand side 8 of the front end 5 of a vehicle. The wheel (not illustrated) is connected to the hub carrier 46, which in turn is pivotally connected to the lower link arm 12 and to the damper 18. The damper 18 is connected by a link 48 to the lever portion 26a of the anti-roll bar 20.

The function of the suspension system is similar as explained above. In this case, the vertical movement of the wheel (not illustrated) is transferred by the link 48 to the lever portion 26a. The link 48 may have an adjustable length.

Figures 1 - 4 disclose embodiments with a torsional spring bar 30 extending over the full width of the vehicle, parallel to the central portion of the anti-roll bar 20. It would be possible to instead use two or more torsional spring bars, for example one torsional spring bar for each wheel. The anti-roll bar 20 could in that case anyway typically extend over the full width of the vehicle.

It would also be possible to have two or more torsional spring bars, preferably extending essentially in parallel to each other, and which are coupled to each other and/ or to the anti-roll bar. For example, two torsional spring bars having a small diameter may replace one torsional spring bar 30 with a large diameter.

In Figures 1 to 4, the coupling between the anti-roll bar 20 and the torsional spring bar 30 is by means of a link arrangement, but other arrangements are also possible, for example a gear wheel arrangement or a joint. If one of the bars 20, 30 is hollow, the other bar may be located inside the hollow bar. Such an arrangement would be space-efficient. The outer bar may be provided with slots, and the number and geometry of the slots may then be varied to select the desired spring characteristics.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A suspension system (2) for a vehicle, said vehicle having a frame (4) and a pair of wheels positioned adjacent said frame (4), each wheel being suspended in a wheel suspension (10), said suspension system (2) comprising an anti-roll bar (20), said anti-roll bar (20) having ends connected to the wheel suspensions (10) of each respective wheel, said anti-roll bar (20) being connected to the frame (4) by a first connection (22a, 22b) permitting rotational movement in relation to the frame (4) around the longitudinal axis (A2) of said anti-roll bar (20),
said suspension system (2) further comprising at least one torsional spring bar (30), said torsional spring bar (30) being fixedly connected to the frame (4) by a second connection (32a, 32b), and
said anti-roll bar (20) being connected to said torsional spring bar (30) by a third connection (36) adapted to transfer rotational and/or twisting movement of said anti-roll bar (20) into a torque of said torsional spring bar (30),
**characterized by**
the third connection (36) being radially offset from the longitudinal axis (A2) of the anti-roll bar (20).

2. The suspension system (2) according to claim 1, wherein the third connection (36) is a link arrangement, a gear wheel arrangement or a joint between the torsional spring bar (30) and the anti-roll bar (20).

3. The suspension system (2) according to any one of the preceding claims, wherein the third connection (36) comprises at least one bracket (38, 40), which is fixed to the anti-roll bar (20) and/or the torsional spring bar (30).

4. The suspension system (2) according to any one of the preceding claims, wherein at least the central portion (28) of the anti-roll bar (20) is parallel to at least the central portion of the torsional spring bar (30).

5. The suspension system (2) according to any one of the preceding claims, wherein a portion of the torsional spring bar (30) has a U-shaped geometry.

6. The suspension system (2) according to any one of the preceding claims, wherein the torsional spring bar (30) extends transversally in relation to the frame (4).

7. The suspension system (2) according to any one of the preceding claims, wherein the torsional spring bar (30) extends essentially from one side of the frame (4) to the opposite side.

8. The suspension system (2) according to any one of the preceding claims, wherein the end of the anti-roll bar (20) is connected to a lower link arm (12) of the wheel suspension (10).

9. The suspension system (2) according to any one of the preceding claims, wherein a link (29, 48) connects the wheel suspension (10) and the anti-roll bar (20).

10. The suspension system (2) according to claim 9, wherein the link (29, 48) has an adjustable length.

11. The suspension system (2) according to any of the preceding claims, wherein connection block (34a) is attached at one side of the frame (4) and another connection block (34b) at the opposite side of the frame (4), each of said connection blocks (34a, 34b) comprising a first connection (22a, 22b) and a second connection (32a, 32b).

12. The suspension system (2) according to any one of the preceding claims, wherein the spring constant of the suspension system (2) is selectable by adjustment of the length, cross-section, material and/or geometry of the anti-roll bar (20), the torsional spring bar (30) and/or the third connection (36).

13. The suspension system (2) according to any of the preceding claims, wherein an actuator (44a, 44b) is connected to the torsional spring bar (30), said actuator (44a, 44b) being adapted to apply a torque to said torsional spring bar (30).

14. A vehicle, wherein the front and/or rear wheels are suspended by a suspension system (2) according to any of the previous claims.

## Patentansprüche

1. Aufhängungssystem (2) für ein Fahrzeug, wobei das Fahrzeug einen Rahmen (4) und ein Paar von Rädern, die angrenzend an den Rahmen (4) angeordnet sind, hat, wobei jedes Rad in einer Radaufhängung (10) aufgehängt ist, wobei das Aufhängungssystem (2) eine Stabilisatorstange (20) umfasst, wobei die Stabilisatorstange (20) Enden hat, die mit den Radaufhängungen (10) jedes jeweiligen Rades verbunden sind, wobei die Stabilisatorstange (20) durch eine erste Verbindung (22a, 22b), die eine Drehbewegung im Verhältnis zu dem Rahmen (4) um die Längsachse (A2) der Stabilisatorstange (20) erlaubt, mit dem Rahmen (4) verbunden ist,
wobei das Aufhängungssystem (2) ferner wenigstens eine Drehstabfeder (30) umfasst, wobei die Drehstabfeder (30) durch eine zweite Verbindung (32a, 32b) unbeweglich mit dem Rahmen (4) verbunden ist, und
wobei die Stabilisatorstange (20) durch eine dritte Verbindung (36), die dafür eingerichtet ist, eine Dreh- und/oder Verdrehungsbewegung der Stabilisatorstange (20) in ein Drehmoment der Drehstabfeder (30) zu überführen, mit der Drehstabfeder (30) verbunden ist,
**dadurch gekennzeichnet,**
**dass** die dritte Verbindung (36) in Radialrichtung von der Längsachse (A2) der Stabilisatorstange (20) versetzt ist.

2. Aufhängungssystem (2) nach Anspruch 1, wobei die dritte Verbindung (36) eine Gestängeanordnung, eine Zahnradanordnung oder ein Gelenk zwischen der Drehstabfeder (30) und der Stabilisatorstange (20) ist.

3. Aufhängungssystem (2) nach einem der vorhergehenden Ansprüche, wobei die dritte Verbindung (36) wenigstens eine Stütze (38, 40), die an der Stabilisatorstange (20) und/oder der Drehstabfeder (30) befestigt ist, umfasst.

4. Aufhängungssystem (2) nach einem der vorhergehenden Ansprüche, wobei wenigstens der Mittelabschnitt (28) der Stabilisatorstange (20) parallel zu wenigstens dem Mittelabschnitt der Drehstabfeder (30) ist.

5. Aufhängungssystem (2) nach einem der vorhergehenden Ansprüche, wobei ein Abschnitt der Drehstabfeder (30) eine U-förmige Geometrie hat.

6. Aufhängungssystem (2) nach einem der vorhergehenden Ansprüche, wobei sich die Drehstabfeder (30) quer im Verhältnis zu dem Rahmen (4) erstreckt.

7. Aufhängungssystem (2) nach einem der vorhergehenden Ansprüche, wobei sich die Drehstabfeder (30) im Wesentlichen von der einen Seite des Rahmens (4) bis zu der gegenüberliegenden Seite erstreckt.

8. Aufhängungssystem (2) nach einem der vorhergehenden Ansprüche, wobei das Ende der Stabilisatorstange (20) mit einem unteren Gestängearm (12) der Radaufhängung (10) verbunden ist.

9. Aufhängungssystem (2) nach einem der vorhergehenden Ansprüche, wobei ein Gestänge (29, 48) die Radaufhängung (10) und die Stabilisatorstange (20) verbindet.

10. Aufhängungssystem (2) nach Anspruch 9, wobei das Gestänge (29, 48) eine einstellbare Länge hat.

11. Aufhängungssystem (2) nach einem der vorhergehenden Ansprüche, wobei ein Verbindungsblock (34a) an der einen Seite des Rahmens (4) und ein anderer Verbindungsblock (34b) an der gegenüberliegenden Seite des Rahmens (4) befestigt ist, wobei jeder der Verbindungsblocks (34a, 34b) eine erste Verbindung (22a, 22b) und eine zweite Verbindung (32a, 32b) umfasst.

12. Aufhängungssystem (2) nach einem der vorhergehenden Ansprüche, wobei die Federkonstante des Aufhängungssystems (2) ausgewählt werden kann durch ein Einstellen der Länge, des Querschnitts, des Werkstoffs und/oder der Geometrie der Stabilisatorstange (20), der Drehstabfeder (30) und/oder der dritten Verbindung (36).

13. Aufhängungssystem (2) nach einem der vorhergehenden Ansprüche, wobei ein Stellantrieb (44a, 44b) mit der Drehstabfeder (30) verbunden ist, wobei der Stellantrieb (44a, 44b) dafür eingerichtet ist, ein Drehmoment auf die Drehstabfeder (30) auszuüben.

14. Fahrzeug, wobei die Vorder- und/oder die Hinterräder durch ein Aufhängungssystem (2) nach einem der vorhergehenden Ansprüche aufgehängt sind.

## Revendications

1. Système de suspension (2) pour un véhicule, ledit véhicule ayant un châssis (4) et une paire de roues positionnées de manière adjacente audit châssis (4), chaque roue étant suspendue dans une suspension de roue (10), ledit système de suspension (2) comprenant une barre antiroulis (20), ladite barre antiroulis (20) ayant des extrémités connectées aux suspensions de roue (10) de chaque roue respective, ladite barre antiroulis (20) étant connectée au châssis (4) par une première connexion (22a, 22b) permettant un mouvement de rotation par rapport au châssis (4) autour de l'axe longitudinal (A2) de ladite barre antiroulis (20),
ledit système de suspension (2) comprenant en outre au moins une barre de ressort de torsion (30), ladite barre de ressort de torsion (30) étant connectée fixement au châssis (4) par une deuxième connexion (32a, 32b), et
ladite barre antiroulis (20) étant connectée à ladite barre de ressort de torsion (30) par une troisième connexion (36) prévue pour transférer le mouvement de rotation et/ou de torsion de ladite barre antiroulis (20) en un couple de ladite barre de ressort de torsion (30),
**caractérisé en ce que**
la troisième connexion (36) est décalée radialement par rapport à l'axe longitudinal (A2) de la barre antiroulis (20).

2. Système de suspension (2) selon la revendication 1, dans lequel la troisième connexion (36) est un agencement de liaison, un agencement de roue d'engrenage ou un joint entre la barre de ressort de torsion (30) et la barre antiroulis (20).

3. Système de suspension (2) selon l'une quelconque des revendications précédentes, dans lequel la troisième connexion (36) comprend au moins une console (38, 40) qui est fixée à la barre antiroulis (20) et/ou à la barre de ressort de torsion (30).

4. Système de suspension (2) selon l'une quelconque des revendications précédentes, dans lequel au moins la portion centrale (28) de la barre antiroulis (20) est parallèle à au moins la portion centrale de la barre de ressort de torsion (30).

5. Système de suspension (2) selon l'une quelconque des revendications précédentes, dans lequel une portion de la barre de ressort de torsion (30) a une géométrie en forme de U.

6. Système de suspension (2) selon l'une quelconque des revendications précédentes, dans lequel la barre de ressort de torsion (30) s'étend transversalement par rapport au châssis (4).

7. Système de suspension (2) selon l'une quelconque des revendications précédentes, dans lequel la barre de ressort de torsion (30) s'étend essentiellement depuis un côté du châssis (4) jusqu'au côté opposé.

8. Système de suspension (2) selon l'une quelconque des revendications précédentes, dans lequel l'extrémité de la barre antiroulis (20) est connectée à un bras de liaison inférieur (12) de la suspension de roue (10).

9. Système de suspension (2) selon l'une quelconque des revendications précédentes, dans lequel une liaison (29, 48) relie la suspension de roue (10) et la barre antiroulis (20).

10. Système de suspension (2) selon la revendication 9, dans lequel la liaison (29, 48) a une longueur ajustable.

11. Système de suspension (2) selon l'une quelconque des revendications précédentes, dans lequel le bloc de connexion (34a) est attaché à un côté du châssis (4) et un autre bloc de connexion (34b) est attaché au côté opposé du châssis (4), chacun desdits blocs de connexion (34a, 34b) comprenant une première connexion (22a, 22b) et une deuxième connexion (32a, 32b).

12. Système de suspension (2) selon l'une quelconque des revendications précédentes, dans lequel la constante de ressort du système de suspension (2) peut être sélectionnée par ajustement de la longueur, de la section transversale, du matériau et/ou de la géométrie de la barre antiroulis (20), de la barre de ressort de torsion (30) et/ou de la troisième connexion (36).

13. Système de suspension (2) selon l'une quelconque des revendications précédentes, dans lequel un actionneur (44a, 44b) est connecté à la barre de ressort de torsion (30), ledit actionneur (44a, 44b) étant prévu pour appliquer un couple à ladite barre de ressort de torsion (30).

14. Véhicule, dans lequel les roues avant et/ou arrière sont suspendues par un système de suspension (2) selon l'une quelconque des revendications précédentes.
